# EUROPÄISCHE PATENTANMELDUNG

(11) **EP 3 893 369 A1**
(43) Veröffentlichungstag der Anmeldung: **13.10.2021**
(21) Anmeldenummer: 20168801.7
(22) Anmeldetag: 08.04.2020
(51) Int. Cl.: H02K 11/35, H02K 11/20, H02K 11/00

(54) **GENERATOR MIT EINER KOMMUNIKATIONSEINRICHTUNG**

(71) Anmelder: Andreas Stihl AG & Co. KG, 71336 Waiblingen (DE)
(72) Erfinder: Däschner, Heiko, 71397 Leutenbach (DE)
(74) Vertreter: Wasmuth, Rolf

(57) **Zusammenfassung**

Die Erfindung betrifft einen Generator zur Energieversorgung eines elektrischen Verbrauchers, wobei der Generator (G) aus einem drehenden Rotor (3) und einem stehenden Stator (2) besteht. Der Stator (2) weist eine Generatorspule (5) auf, die mit einem elektrischen Verbraucher (4) verbunden ist, derart, dass die bei drehendem Rotor (3) in der Generatorspule (5) induzierte Spannung (Uo) an dem elektrischen Verbraucher (4) anliegt und die elektrische Energie zum Betrieb des Verbrauchers (4) bereitstellt. Um Daten des Generators an einen Empfänger auszugeben, ist vorgesehen, dass der elektrische Verbraucher (4) eine Kommunikationseinrichtung (K) ist, die mit zumindest einem Empfänger (E) außerhalb des Generators (G) in Verbindung steht. Die Generatorspule (5) und die Kommunikationseinrichtung (K) sind gemeinsam an einem Statorträger (8) des Generators (G) gehalten.

## Beschreibung

Die Erfindung betrifft einen Generator zur Energieversorgung eines elektrischen Verbrauchers, wobei der Generator aus einem drehenden Rotor und einem stehenden Stator besteht. Der Stator weist zumindest eine Generatorspule auf, die mit dem elektrischen Verbraucher verbunden ist, derart, dass die bei drehendem Rotor in der Generatorspule induzierte Spannung an dem elektrischen Verbraucher anliegt und die elektrische Energie zum Betrieb des Verbrauchers bereitstellt.

Modernes Motormanagement erfordert die Verarbeitung einer Vielzahl von Daten, die über eine geeignete Datenverbindung an eine Auswerteeinheit, eine Steuereinrichtung oder dergleichen elektronisches Steuergerät weitergeleitet werden müssen.

Der Erfindung liegt die Aufgabe zugrunde, einen Generator zur Energieversorgung eines elektrischen Verbrauchers derart auszubilden, dass in einfacher Weise anfallende elektronische Daten z.B. des Generators oder eines antreibenden Verbrennungsmotors an eine Datenverbindung weitergegeben werden können.

Die Aufgabe wird erfindungsgemäß dadurch gelöst, dass eine von dem Generator gespeiste Kommunikationseinrichtung vorgesehen ist, die mit zumindest einem Empfänger außerhalb des Generators in Kommunikationsverbindung steht. Dabei ist vorgesehen, die Generatorspule und die Kommunikationseinrichtung gemeinsam an einem Statorträger des Generators anzuordnen. Eine oder mehrere Generatorspulen und die Kommunikationseinrichtung sind gemeinsam an dem Statorträger gehalten.

Die Integration der Kommunikationseinrichtung in den Statorträger gewährleistet einerseits kurze Leitungsverbindungen zur Energieversorgung der Kommunikationseinrichtung und andererseits die Möglichkeit, Informationen über die erzeugte Generatorspannung wie Amplitude, Frequenz, Signalform und dergleichen unmittelbar zu erfassen und als Information über eine Datenverbindung weiterzugeben. So kann zum Beispiel im Betrieb eines Arbeitsgerätes auch der antreibende Verbrennungsmotor überwacht werden. Als mögliche Anwendungsbeispiele verbrennungsmotorisch angetriebener, handgetragener Arbeitsgeräte kommen Blasgeräte, Trennschleifer, Freischneider, Heckenscheren, Motorsägen und dergleichen in Betracht. Auch eine Anwendung bei von einem Benutzer bewegten oder selbstfahrenden Rasenmähern ist vorteilhaft möglich. Der Generator ist insbesondere als ergänzendes Bauteil in einem bestehenden System einsetzbar und kann insbesondere nachgerüstet werden. Der Generator kann z. B. zur Aufrüstung oder zum Tuning eines bestehenden Systems eingesetzt werden. Über die Kommunikationseinrichtung können erfasste Daten weitergegeben werden, z. B. an ein Motorsteuergerät eines Verbrennungsmotors oder an ein Steuergerät eines vorzugsweise getragenen, insbesondere handgeführten Arbeitsgerätes wie ein Blasgerät, ein Trennschleifer, ein Freischneider, eine Heckenscheren, eine Motorsäge oder dgl. Arbeitsgerät.

Die elektrische Last des Generators kann beispielhaft ein Temperatursensor, eine optische Anzeige wie eine LED, ein akustisches Ausgabegerät wie ein Lautsprecher oder ein anderer elektrischer Verbraucher sein. Als elektrische Last ist auch eine Daten verarbeitende Sensorik zu verstehen, die gemeinsam mit der Kommunikationseinrichtung am Statorträger gehalten sein kann oder auch extern des Statorträgers vorgesehen sein kann.

In Weiterbildung der Erfindung ist der Statorträger als Gehäusering ausgebildet, in dem die Generatorspule und die Kommunikationseinrichtung und vorzugsweise auch eine Sensorik aufgenommen sind. Bereits verbaute baugleiche Generatoren können in einfacher Weise durch Austausch des Stators mit einer Kommunikationseinrichtung und/oder einer Sensorik versehen werden, wodurch vorteilhaft eine Anbindung an moderne Überwachungssysteme möglich ist. Es kann zweckmäßig sein, über einen Umfangswinkel des Statorträgers Pole des Generators zu entfernen, um so einen Aufnahmeraum für die Kommunikationseinrichtung zu schaffen. Vorzugsweise bleibt die Anzahl der Pole des Rotors unverändert. Wird ein Pol des Stators weggelassen, ergibt sich vorteilhaft ein Generatorsignal mit einem signifikanten Signalbild im Bereich des entfernten Pols, z. B. eine Signallücke. Durch einen entfernten Pol des Stators ist so ein Lagesignal generiert, welches einer konstruktiv vorgegebenen Drehlage z. B. der Kurbelwelle eines antreibenden Verbrennungsmotors zugeordnet werden kann. So ist eine eindeutige Zuordnung der Winkelposition im Kurbelkreis möglich und der Kurbelwinkel steht als zusätzliche Information zur Verfügung.

Die Leistung des Generators mit verminderter Anzahl von Statorpolen ist so ausgelegt, dass eine ausreichende elektrische Leistung zur Versorgung einer äußeren Last sowie zur Versorgung der Kommunikationseinrichtung innerhalb des Gehäuserings gewährleistet ist.

Die Kommunikationseinrichtung ist vorteilhaft eine drahtlose Kommunikationseinrichtung, so dass körperliche Verbindungsleitungen oder dergleichen entfallen. Insbesondere weist die Kommunikationseinrichtung eine Antenne für eine drahtlose Kommunikationsverbindung auf. Eine derartige Antenne für die drahtlose Kommunikationsverbindung kann in einfacher Weise durch die elektrische Leitung von der Generatorspule zu einer äußeren elektrischen Last gebildet sein.

Die Kommunikationseinrichtung ist als Modul ausgebildet, insbesondere als Funkmodul. Die Funktechniken des Funkmoduls können angepasst gewählt werden. So kann das Funkmodul ein Narrowband IoT-Modul sein, als Bluetooth-Modul vorgesehen sein, als WiFi-Modul ausgebildet sein, als GSM-Modul vorgehalten werden oder als LTE-Modul gestaltet sein. Zweckmäßig sind alle Funktechniken, die eine stabile, sichere Kommunikationsverbindung gewährleisten.

In vorteilhafter Weiterbildung der Erfindung steht die Empfangseinheit in datenübertragender Verbindung mit einer Cloud. Eine derartige Datenverbindung ist insbesondere eine bidirektionale Datenverbindung und gewährleistet einerseits eine sichere Ablage und Speicherung von Daten in der Cloud und andererseits den Zugriff auf einen großen Datenpool der Cloud.

Die Kommunikationseinrichtung ist vorteilhaft derart ausgebildet, dass sie insbesondere im Leerlauf eines antreibenden Verbrennungsmotors als sogenannter Repeater und/oder als Kommunikationseinrichtung mit voller Funktionalität zur Verfügung steht. Der Repeater kann zweckmäßig für eine vorzugsweise externe drahtlose Funkverbindung betrieben werden. Die als Repeater und/oder Kommunikationseinrichtung betriebene Baueinheit kann vorteilhaft Daten aus dem nahen Umfeld empfangen und sendet sie - insbesondere verstärkt - an eine beliebige Empfangseinheit weiter. Die insbesondere als Repeater betriebene Kommunikationseinrichtung ist direkt aus dem Generator mit Energie versorgt, weshalb die Kommunikationseinrichtung empfangene Signale signifikant verstärkt weitergeben kann. Der Generator ist derart ausgebildet, dass der als Repeater betriebenen Kommunikationseinrichtung - vorteilhaft bereits im Leerlauf eines antreibenden Verbrennungsmotors - eine ausreichende elektrische Leistung zur Verfügung steht.

Es kann zweckmäßig sein, eine Signalauswerteeinheit zur Auswertung der Spannungssignale des Generators und/oder empfangener Sensordaten vorzusehen.

In Weiterbildung der Erfindung umfasst der Statorträger eine Signalauswerteeinheit, die ausgebildet ist, sowohl die induzierten Spannungssignale des Generators als auch empfangene Sensordaten auszuwerten. Die Signalauswerteeinheit ist elektrisch mit der Kommunikationseinrichtung verbunden und stellt dieser die Ergebnisse der Auswertung zur Verfügung. Die Kommunikationseinrichtung ist derart ausgebildet, dass sie die Ergebnisse insbesondere über die drahtlose Kommunikationsverbindung an die Empfangseinheit weitergibt.

Vorteilhaft ist die Kommunikationsverbindung zwischen der Kommunikationseinrichtung und der Empfangseinheit eine bidirektionale Datenverbindung. Dies bedeutet, dass nicht nur eine Kommunikation von der Kommunikationseinrichtung zur Empfangseinheit möglich ist, sondern auch in Gegenrichtung die Empfangseinheit Daten an die Kommunikationseinrichtung übermitteln kann. Sowohl die Kommunikationseinrichtung als auch die Empfangseinheit sind vorzugsweise als Sender/Empfänger ausgebildet. Zeigen die von der Kommunikationseinrichtung übermittelten Ergebnisse der Signalauswerteeinheit Abweichungen von Normalwerten, so kann frühzeitig ein Ausfall des Generators oder des antreibenden Verbrennungsmotors erkannt und durch Eingriff in das System einem frühzeitigen Ausfall entgegengewirkt werden.

Das Kommunikationsmodul ist zweckmäßig mit zumindest einem Sensor verbunden, dessen Ausgangssignal über das Kommunikationsmodul der Empfangseinheit übermittelt wird. Über den Sensor kann zum Beispiel die Temperatur des Verbrennungsmotors, des Generators, des Arbeitsgerätes oder der Maschine selbst erfasst und nach außen gemeldet werden, so dass frühzeitig eine mögliche Schädigung des Verbrennungsmotors, des Generators, des Arbeitsgerätes oder der Maschine selbst z. B. durch z. B. eine zu hohe Temperatur erkannt werden kann. Durch Absenkung der äußeren Last oder anderer Parameter wie z. B. durch Abschalten einer äußeren elektrischen Last kann beispielsweise ein drohender Ausfall des Generators vermieden werden.

In einer bevorzugten Ausführungsform ist der Generator an einem Verbrennungsmotor angeordnet, der einen Zylinder mit einem Brennraum aufweist, welcher durch einen Kolben begrenzt ist. Der Kolben ist über ein Pleuel mit einer in einem Kurbelgehäuse drehend gelagerten Kurbelwelle antriebsverbunden. Um die Kurbelwelle zu drehen, zündet eine Zündvorrichtung mit einer Zündkerze ein in den Brennraum des Zylinders angesaugtes Gemisch. Der Rotor des Generators ist an einem mit der Kurbelwelle drehenden Schwungrad ausgebildet, während der Stator zwischen dem Schwungrad und dem Kurbelgehäuse drehfest am Verbrennungsmotor angeordnet ist.

Insbesondere ist vorgesehen, den Generator mit dem erfindungsgemäß ausgebildeten Stator als zusätzliche Energiequelle anzuordnen. Eine vorhandene Zündvorrichtung kann vorteilhaft aus einem eigenen Zündgenerator mit Energie versorgt werden, so dass der erfindungsgemäße Generator ein 'Add On' ist, der für den Grundbetrieb des antreibenden Verbrennungsmotors nicht zwingend notwendig ist. Der Generator kann vorteilhaft auch als einzige Energiequelle des Verbrennungsmotors vorgesehen sein und neben der Zündvorrichtung auch die Kommunikationseinrichtung, eine Signalauswerteeinheit, Sensoren und/oder anderen elektrischen Lasten wie z. B. eine Griffheizung oder Vergaserheizung mit Energie versorgen.

Um eine störungsfreie, sichere Kommunikationsverbindung zwischen der Kommunikationseinrichtung und der insbesondere externen Empfangseinheit zu gewährleisten, ist vorgesehen, das Schwungrad zumindest teilweise aus elektrisch nicht leitendem Material zu bilden. Vorzugsweise besteht das Schwungrad vollständig aus elektrisch nicht leitendem Material. Ein geeignetes Material ist Kunststoff.

Bei der Anwendung des erfindungsgemäßen Generators bei einem Verbrennungsmotor ist vorteilhaft vorgesehen, die Kommunikationseinrichtung mit der Zündvorrichtung zu synchronisieren. Zur Synchronisation ist vorgesehen, die Kommunikationseinrichtung derart auszubilden, dass im Bereich eines vorgegebenen Kurbelwellenwinkels der Zündung eine Kommunikation vollständig gesperrt ist. Zweckmäßig ist die Kommunikationseinrichtung über eine Datenverbindung mit der Zündvorrichtung verbunden, so dass in einfacher Weise der Kurbelwellenwinkel der Zündung erkannt werden kann. Die Verbindung zwischen der Kommunikationseinrichtung und der Zündvorrichtung ist insbesondere drahtlos ausgeführt.

Die Datenverbindung mit der Zündvorrichtung kann zweckmäßig auch der Übermittlung von Daten von der Kommunikationseinrichtung zur Zündvorrichtung dienen. Die Zündvorrichtung ist vorteilhaft derart ausgebildet, dass in Abhängigkeit der empfangenen Daten die Zündung verändert wird, z. B. der Zündwinkel oder dgl.

Die in den Ansprüchen wiedergegebenen Merkmale sowie die nachfolgend in der ausführlichen Beschreibung angegebenen Merkmale, Vorteile und alternative Ausführungsbeispiele lassen sich miteinander beliebig kombinieren, ohne den Gedanken der Erfindung zu verlassen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine schematische Darstellung des Grundaufbaus eines erfindungsgemäßen Generators,
- Fig. 2: eine schematische Darstellung des erfindungsgemäßen Generators aus Stator und Rotor,
- Fig. 3: in perspektivische Darstellung einen Gehäusering des Stators mit darin angeordneter Generatorspule und einer Kommunikationseinrichtung,
- Fig. 4: in perspektivischer Darstellung den im Rotor angeordneten Gehäusering nach Figur 3,
- Fig. 5: eine schematische Darstellung eines Verbrennungsmotors mit einem erfindungsgemäßen Generator zwischen einem Schwungrad und dem Kurbelgehäuse des Verbrennungsmotors.

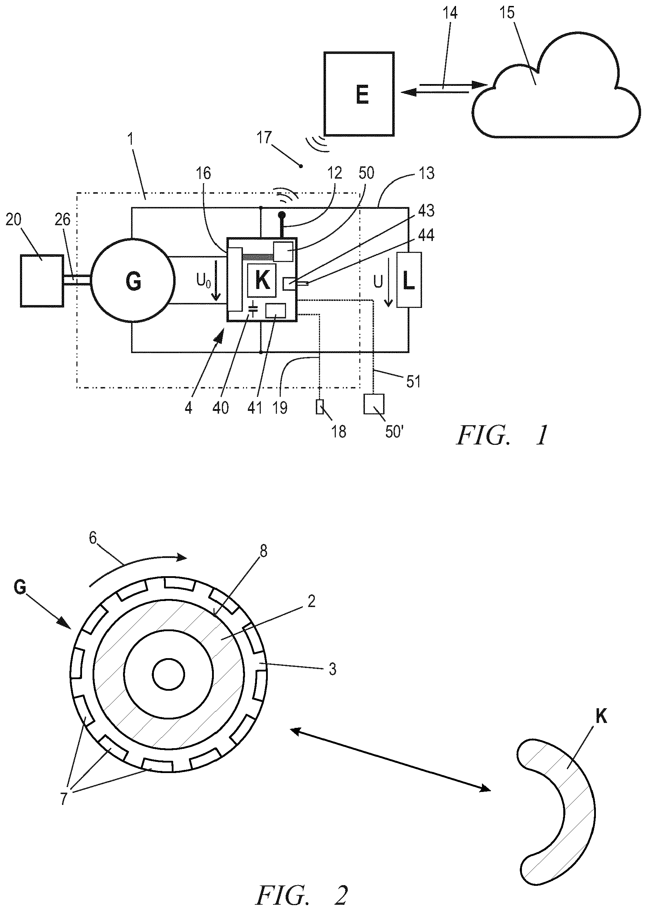

In Fig. 1 ist ein schematisch dargestellter Generator mit G bezeichnet, dessen Generatorspannung U über eine elektrische Leitung 13 an einer elektrischen Last L anliegt. Der Generator G liefert die zum Betrieb der insbesondere äußeren elektrischen Last L benötigte elektrische Energie. Ein Beispiel einer elektrischen Last L ist ein Temperatursensor, eine optische Anzeige wie z. B. eine LED, eine akustische Ausgabe wie z.B. ein kleiner Lautsprecher, eine Sensorik zur Erfassung von Daten wie Drehrate, Beschleunigung, Neigung, Zeit, Umgebungsdruck, Druck und Temperatur im Kurbelgehäuse, Positionsdatenempfänger wie GPS oder auch Griffheizung, Vergaserheizung oder dgl. Elektrische Last.

In Fig. 1 ist die bauliche Einheit 1 des Generators G strichpunktiert angedeutet. Sie umfasst neben dem Stator 2 und dem Rotor 3 (Fig. 2) auch eine Kommunikationseinrichtung K, die als elektrischer Verbraucher 4 mit zumindest einer Generatorspule 5 verbunden ist. Eine Generatorspannung U₀ liegt an der Kommunikationseinrichtung K als elektrischer Verbraucher 4 an, wobei der Generator G die zum Betrieb der Kommunikationseinrichtung K notwendige elektrische Energie liefert. Bevorzugt ist der Generator G derart ausgebildet, dass im Leerlauf eines antreibenden Verbrennungsmotors 20 die erzeugte elektrische Leistung ausreichend ist, die Kommunikationseinrichtung K elektrisch zu betreiben. Es können mehrere Generatorspulen 5 in Reihe und/oder parallel geschaltet werden, um eine gewünschte Generatorspannung bereitzustellen. Im Ausführungsbeispiel ist vorgesehen, dass eine erste Generatorspannung U von z. B. 12 V bis 16 V größer ausgelegt ist als eine zweite Generatorspannung U₀ von z. B. 3 V oder 5 V. So kann die zweite Generatorspannung U₀ an die zulässige Eingangsspannung der Kommunikationseinrichtung K von z. B. 3 V angepasst sein, während die erste Generatorspannung U an eine zu speisende Last L angepasst ist.

Es kann zweckmäßig sein, in der Kommunikationseinrichtung K einen Energiespeicher vorzusehen. In Figur 1 ist beispielhaft ein Akku 41 vorgesehen. Anstelle oder ergänzend zu einem Akku 41 kann auch ein Kondensator 40, vorzugsweise ein Hochleistungskondensator, insbesondere ein als Supercap ausgebildeter Hochleistungskondensator vorgesehen sein.

Wie in Figur 2 schematisch dargestellt, ist der Generator G ein mehrpoliger Generator; im gezeigten Ausführungsbeispiel ist ein 12-poliger Generator G dargestellt. Ein achtpoliger Generator G teilt den Kurbelkreis von 360° in 12 Abschnitte zu 30° Kurbelwellenwinkel auf. Der zum Beispiel in Pfeilrichtung 6 drehende Rotor 3 weist magnetische Pole 7 auf, die bei der Drehung um den Stator 2 in dessen Generatorspulen 5 Spannungen induzieren. Die induzierten Spannungen haben eine positive und eine negative Halbwelle, so dass jeder Halbwelle 15° Kurbelwellenwinkel zugeordnet sind. Die induzierten Spannungen bilden in Reihe oder parallel geschaltet die Generatorspannung U zur Energieversorgung einer elektrischen Last L oder die Generatorspannung Uo zur Energieversorgung eines inneren elektrischen Verbrauchers 4, im Ausführungsbeispiel die Kommunikationseinrichtung K. Eine elektrische Last L kann beispielhaft auch ein Temperatursensor, eine optische Anzeige wie eine LED, ein akustisches Ausgabegerät ein Lautsprecher oder ein anderer elektrischer Verbraucher sein.

Es kann zweckmäßig sein, nicht alle Generatorspulen 5 zum Bereitstellen der Generatorspannung U miteinander in Reihe oder parallel zu kombinieren, sondern einige Generatorspulen 5 ausschließlich zur Versorgung der Kommunikationseinrichtung K zu nutzen. Im Ausführungsbeispiel nach Figur 1 sind einige Generatorspulen 5 zur Bereitstellung einer Versorgungsspannung U₀ für die Kommunikationseinrichtung K genutzt. Die Versorgungsspannung U₀ ist bevorzugt kleiner als die Generatorspannung U zur Energieversorgung einer äußeren Last L.

In Fig. 2 ist schematisch dargestellt, dass die Kommunikationseinrichtung K als Teil des Stators 2 in diesen integriert ist. Die Generatorspulen 5 und die Kommunikationseinrichtung K sind an einem gemeinsamen Statorträger 8 gehalten. Die Kommunikationseinrichtung K bildet baulich einen Teil des Stators 2.

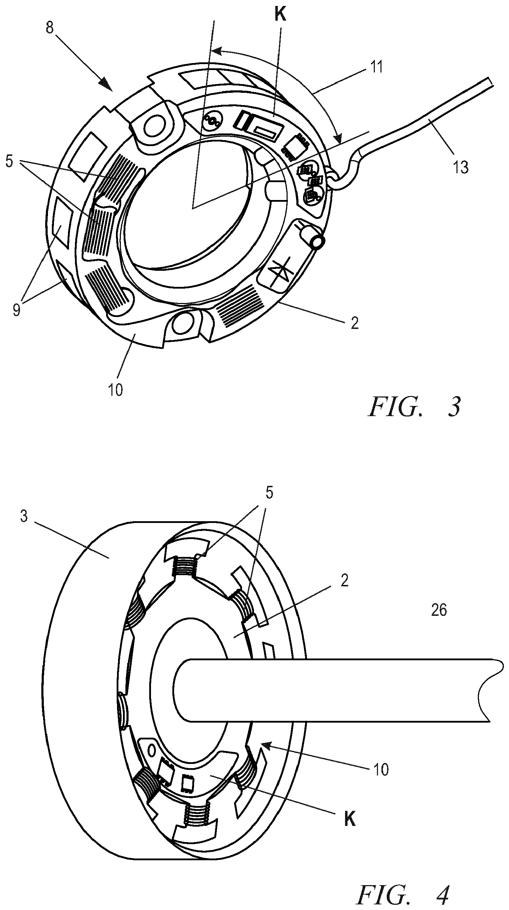

In bevorzugter Ausführungsform der Erfindung ist der Statorträger 8 als Gehäusering 10 ausgebildet, der einerseits die Generatorspulen 5 auf entsprechenden Polschenkeln 9 aufnimmt und andererseits die Kommunikationseinrichtung K aufnimmt. Wie Fig. 3 zeigt, ist über einen Umfangsabschnitt 11 des Gehäuserings 10 die Kommunikationseinrichtung K aufgenommen. Im gezeigten Ausführungsbeispiel erstreckt sich der Umfangsabschnitt 11 über 20° bis 90°, insbesondere 30° bis 60° Umfangswinkel.

Wie Fig. 4 zeigt, wird der Stator 2 bzw. der den Stator 2 bildende Gehäusering 10 von einer antreibenden Welle durchragt, die im gezeigten Ausführungsbeispiel die Kurbelwelle 26 eines Verbrennungsmotors 20 ist. Der Rotor 3 ist als Glocke ausgebildet und auf dem Ende der Welle festgelegt. Die Glocke des Rotors 3 übergreift den Stator 2.

Es kann zweckmäßig sein, in dem Umfangsabschnitt 11 auf Polschenkel 9 des Stators 2 zu verzichten, um einen ausreichenden Einbauraum für die Kommunikationseinrichtung K bereitzustellen. Der Generator G ist ein leistungsstarker mehrpoliger Generator. Die elektrische Leistung des Generators G ist größer als die notwendige elektrische Energie zur Versorgung der externen Last L und der im Statorträger 8 angeordneten inneren Kommunikationseinrichtung K. Der mit einem polfreien Umfangsabschnitt 11 ausgebildete Generator G hat eine Generatorleistung, die größer ist als die notwendige elektrische Energie zur Versorgung der externen Last L und des internen elektrischen Verbrauchers in Form der Kommunikationseinrichtung K oder weiterer externer Verbraucher. Durch den polfreien Umfangsabschnitt 11 des Stators 2 ergeben sich keine grundsätzlichen Beeinträchtigungen der elektrischen Funktion. Vielmehr kann durch das Entfernen eines Statorpols eine Drehlageinformation erhalten werden, die sich in einem entsprechend ausgebildeten Signalverlauf der induzierten Spannung ausprägt.

Wie in Figur 1 schematisch dargestellt, ist die Kommunikationseinrichtung K bevorzugt eine drahtlose Kommunikationseinrichtung. Die drahtlose Kommunikationseinrichtung K steht drahtlos mit einer Empfangseinheit E in Verbindung. Die Empfangseinheit E ist vorzugsweise außerhalb des Generators G vorgesehen. Die Empfangseinheit E kann zweckmäßig außerhalb des Statorträgers 8 liegen und/oder außerhalb des Gehäuserings 10. Bevorzugt hat die Kommunikationseinrichtung K eine Antenne 12 für die drahtlose Kommunikationsverbindung 17.

In einer weiteren Ausführungsform kann die elektrische Leitung 13 vom Generator G zu einer äußeren Last L als Antenne für die Kommunikationseinrichtung K genutzt werden.

Die Kommunikationseinrichtung K ist bevorzugt als Funkmodul ausgebildet. Ein derartiges Funkmodul kann ein Bluetooth-Modul, ein WiFi-Modul, ein GSM-Modul oder ein LTE-Modul sein. Eine bevorzugte Ausführungsform ist die Ausbildung als Narrowband IoT-Modul. Narrowband IoT ist ein Funkstandard, um Geräte im Internet der Dinge (Internet auf Things - IoT) zu vernetzen. Es basiert auf bestehenden Mobilfunknetzen und benötigt auf Seiten der Kommunikationseinrichtung K signifikant weniger Energie als herkömmliche Mobilfunkgeräte wie Smartphones oder Handys. So kann die Kommunikationseinrichtung K mit nur kleinem Energiebedarf versorgt werden. Es ist nur eine geringe elektrische Leistung des Generators G notwendig ist. Vorteilhaft ist der Generator derart ausgebildet, dass bereits im Leerlauf eines antreibenden Verbrennungsmotors der Generator den Energiebedarf der Kommunikationseinrichtung K und/oder anderer elektrischer Lasten vollständig deckt. Es kann eine Ausbildung zweckmäßig sein, bei der die Kommunikationseinrichtung K nur 3 % bis 15 %, insbesondere 5 % bis 10 % der vom Generator G erzeugten elektrischen Nennleistung bei Nenndrehzahl benötigt.

Es kann vorteilhaft sein, dass die mit der Kommunikationseinrichtung K kommunizierende Empfangseinheit E in datenübertragender Verbindung 14 mit einer Cloud 15 steht.

Es kann zweckmäßig sein, die Kommunikationseinrichtung K als Repeater zur Verstärkung und Weiterleitung von externen Funksignalen zu nutzen. So kann ein Benutzer sein Smartphone mit der Kommunikationseinrichtung K koppeln, so dass diese die vom Smartphone gesendeten Funksignale empfängt, verstärkt und als verstärktes Signal aussendet. So kann der Benutzer eines Arbeitsgerätes Musik von seinem Smartphone zum Beispiel auf Kopfhörern empfangen, wobei das Smartphone mit nur geringer Leistung zur Kommunikationseinrichtung K im Nahbereich sendet und die eine Funkstrecke überbrückenden Funksignale hoher Leistung von der Kommunikationseinrichtung K abgegeben werden.

In bevorzugter Weiterbildung der Erfindung kann der Stator 2 eine Signalauswerteeinheit 16 umfassen. Die Signalauswerteeinheit 16 ist vorzugsweise zusammen mit der Kommunikationseinrichtung K am Statorträger 8 gehalten, insbesondere in den Gehäusering 10 des Statorträgers 8 eingebaut. Der Signalauswerteeinheit 16 ist das Spannungssignal des Generators G, insbesondere die Generatorspannung Uo, zugeführt. Vorteilhaft wertet die Signalauswerteeinheit 16 das Spannungssignal des Generators G aus, wobei die Kommunikationseinrichtung K die Ergebnisse der Signalauswertung an die Empfangseinheit E überträgt. Insbesondere kann im Gehäusering 10 des Generators G ergänzend eine Sensorik 50 vorgesehen sein, um zum Beispiel Temperatur, Drehrate, Beschleunigung, Neigung, Zeit, Umgebungsdruck, ein GPS Signal oder dergleichen zu erfassen und die erfasste Information zu verarbeiten.

Die Kommunikationsverbindung 17 zwischen der Kommunikationseinrichtung K und der Empfangseinheit E ist eine bidirektionale Datenverbindung, d. h. es ist eine Datenübermittlung von der Kommunikationseinrichtung K zur Empfangseinheit E ebenso möglich wie eine Datenübermittlung von der Empfangseinheit E zur Kommunikationseinrichtung K. So kann ausgehend von der Empfangseinheit E an der Kommunikationseinrichtung K eingegriffen werden, zum Beispiel das Kommunikationsprotokoll der Kommunikationseinrichtung K geändert werden oder der Funkstandard der Kommunikationseinrichtung K, die Amplitude des Funksignals oder dessen Sende- und/oder Empfangskanal.

Es kann auch vorteilhaft sein, wie in Figur 1 schematisch dargestellt, mit der Kommunikationseinrichtung K einen Sensor 18 oder allgemein eine Sensorik 50 zu verbinden, mit der zum Beispiel die Temperatur oder die Drehzahl des Generators G und/oder des antreibenden Verbrennungsmotors erfasst und über eine Signalleitung 19 der Kommunikationseinrichtung K übermittelt. Über einen Sensor 18 bzw. eine Sensorik 50 wäre nicht nur die Temperatur sondern zum Beispiel auch die Drehrate, die Beschleunigung, die Neigung, die Zeit, der Umgebungsdruck oder auch ein GPS Signal zu erfassen. Z. B. kann eine überhöhte Temperatur des Generators G und/oder des antreibenden Verbrennungsmotors von außerhalb des Generators G erkannt und vor einem frühzeitigen Ausfall gewarnt werden. Über die Drehzahl des Generators G und die Amplitude der induzierten Spannung können auch weitere Betriebsdaten zur Funktion des Generators G und/oder eines antreibenden Verbrennungsmotors erfasst und nach außen an die Empfangseinheit E übermittelt werden.

Wie in Fig. 1 strichliert dargestellt, kann die Sensorik 50 auch außerhalb des Stators 2 bzw. des Gehäuserings 10 angeordnet sein und mit der Kommunikationseinrichtung K per Datenleitung 51 oder drahtlos verbunden sein.

In einer bevorzugten Ausführungsform der Erfindung ist der Generator G in einem Verbrennungsmotor 20 eingebaut. Der Verbrennungsmotor 20 umfasst einen Zylinder 21 mit einem Brennraum 22, der durch einen Kolben 23 begrenzt ist. Der Kolben 23 ist über ein Pleuel 24 mit einer in einem Kurbelgehäuse 25 drehend gelagerten Kurbelwelle 26 antriebsverbunden. Über eine Gemischbildungseinrichtung, im gezeigten Ausführungsbeispiel einen Vergaser 27, wird dem Brennraum 22 brennfähiges Gemisch zugeführt. Das Gemisch wird von einer Zündkerze 28 in Abhängigkeit von der Drehlage der Kurbelwelle 26 bzw. der Stellung des Kolbens 23 über eine Zündvorrichtung 30 gezündet. Die Drehlage der Kurbelwelle 26 bzw. die Hubstellung des Kolbens 23 wird über den Kurbelwellenwinkel erkannt. Die Zündvorrichtung 30 ist mit der Zündkerze 28 über ein Zündkabel 29 verbunden. Auf einem Ende 31 der Kurbelwelle 26 ist ein Schwungrad 32 gehalten, welches im gezeigten Ausführungsbeispiel vorzugsweise als Gebläserad ausgebildet ist. Zwischen dem Schwungrad 32 und dem Kurbelgehäuse 25 ist der Generator G angeordnet. Bevorzugt weist das Kurbelgehäuse 25 eine Ansenkung 33 auf, die einen Aufnahmeraum für den Generator G, insbesondere für den Stator 2 des Generators G, bildet. Zweckmäßig greift das Schwungrad 32 mit einem umlaufenden Steg 34 in die Ansenkung 33 ein. Insbesondere ist der Steg 34 als Träger für Dauermagnete 35 vorgesehen. Der die Dauermagnete 35 tragende Steg 34 bildet den Rotor 3 des Generators G. Der Stator 2 ist in der Ansenkung 33 drehfest gehalten. Der Stator 2 wird von dem Ende 31 der Kurbelwelle 26 durchragt.

Wie vorstehend beschrieben, umfasst der Stator 3 eine Mehrzahl von Polen 9 mit Generatorspulen 5 sowie die Kommunikationseinrichtung K und vorzugsweise eine Signalauswerteeinheit 16. Um insbesondere eine sichere drahtlose Kommunikationsverbindung 17 zwischen der Kommunikationseinrichtung K und der Empfangseinheit E zu gewährleisten, ist vorteilhaft vorgesehen, das Schwungrad 32 zumindest teilweise aus elektrisch nicht leitendem Material auszubilden. Insbesondere besteht das Schwungrad 32 vollständig aus nicht leitendem Material. Vorzugsweise ist das Schwungrad 32 aus Kunststoff hergestellt.

Die Zündvorrichtung 30 erzeugt eine Hochspannung, die über das Zündkabel 29 der Zündkerze 28 zugeführt ist. Immer dann, wenn die Zündkerze 28 einen Zündfunken abgibt, um das Gemisch zu entzünden, treten elektromagnetische Störungen auf. Die Zündung der Zündkerze 28 erfolgt in einem ausgewählten Kurbelwellenwinkelbereich zu einem vorgegebenen Kurbelwellenwinkel (Zündwinkel). In Weiterbildung der Erfindung ist vorgesehen, die Kommunikationseinrichtung K derart auszubilden, dass sie mit der Zündvorrichtung 30 synchronisiert ist. Die Synchronisation ist so vorgesehen, dass die Kommunikationseinrichtung K die Kommunikationsverbindung 17 im Bereich des vorgegebenen Kurbelwellenwinkels (Zündwinkel) sperrt. Außerhalb des Bereichs des vorgegebenen Kurbelwellenwinkels der Zündung ist eine störungsfreie Kommunikationsverbindung 17 sichergestellt.

Zweckmäßig ist die Kommunikationseinrichtung K über eine Datenverbindung 36 mit der Zündvorrichtung 30 verbunden. Insbesondere ist eine drahtlose Verbindung der Kommunikationseinrichtung K mit der Zündvorrichtung 30 vorgesehen.

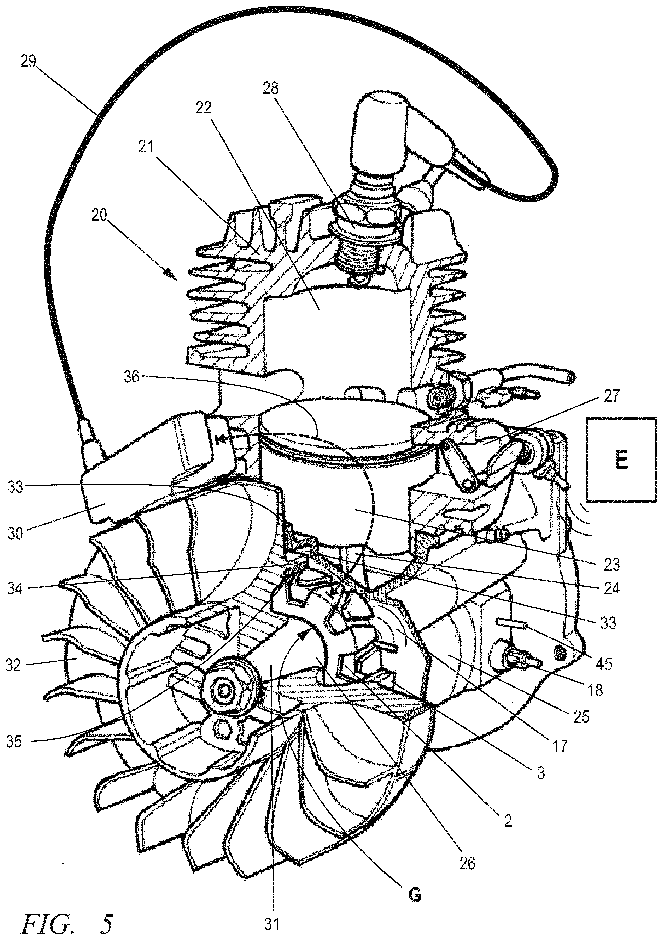

Wie in Fig. 5 dargestellt, ist die Empfangseinheit E außerhalb des Verbrennungsmotors 20, insbesondere außerhalb eines Gehäuses des Verbrennungsmotors 20 angeordnet. Es kann zweckmäßig sein, die Empfangseinheit E innerhalb eines Gehäuses des Verbrennungsmotors 20 anzuordnen.

In besonderer Ausgestaltung der Erfindung kann der Generator G zur Energieversorgung eines elektrischen Verbrauchers bei getragenen, handgeführten Arbeitsgeräten wie Freischneider, Motorsäge, Trennschleifer oder dergleichen Arbeitsgerät nachgerüstet werden. Dies bedeutet, dass der erfindungsgemäße Generator G nachträglich in ein bereits gefertigtes und/oder ausgeliefertes Arbeitsgerät eingebaut werden kann. Der erfindungsgemäße Generator G kann dabei insbesondere als zusätzliche Energiequelle vorgesehen werden.

Es kann zweckmäßig sein, im Stator 2, in der Sensorik 50 oder im Gehäusering 10 einen Drucksensor 43 (Fig. 1) zur Erfassung des Kurbelgehäusedrucks im Kurbelgehäuse 25 anzuordnen. Zweckmäßig ist der Drucksensor 43 über einen Druckanschluss 44 mit dem Kurbelgehäusedruck beaufschlagt. Vorteilhaft ist der Druckanschluss 44 über eine Druckleitung 45 (Fig. 5) mit dem Kurbelgehäuse 25 verbunden.

## Patentansprüche

1. Generator zur Energieversorgung eines elektrischen Verbrauchers, wobei der Generator (G) aus einem drehenden Rotor (3) und einem stehenden Stator (2) besteht, und der Stator (2) zumindest eine Generatorspule (5) aufweist, die mit einem elektrischen Verbraucher (4) verbunden ist, derart, dass die bei drehendem Rotor (3) in der Generatorspule (5) induzierte Spannung (U₀) an dem elektrischen Verbraucher (4) anliegt und die elektrische Energie zum Betrieb des Verbrauchers (4) bereitstellt,
**dadurch gekennzeichnet, dass** der elektrische Verbraucher (4) eine Kommunikationseinrichtung (K) ist, die mit zumindest einem Empfänger (E) außerhalb des Generators (G) in Verbindung steht, und die Generatorspule (5) und die Kommunikationseinrichtung (K) gemeinsam an einem Statorträger (8) des Generators (G) gehalten sind.

2. Generator nach Anspruch 1,
**dadurch gekennzeichnet, dass** der Statorträger (8) als Gehäusering (10) ausgebildet ist, in dem die Generatorspule (5) und die Kommunikationseinrichtung (K) aufgenommen sind.

3. Generator nach Anspruch 1,
**dadurch gekennzeichnet, dass** die Kommunikationseinrichtung (K) eine drahtlose Kommunikationseinrichtung ist.

4. Generator nach Anspruch 1,
**dadurch gekennzeichnet, dass** die Kommunikationseinrichtung (K) eine Antenne (12) aufweist, wobei die Antenne (12) insbesondere durch die elektrische Leitung (13) von dem Generator (G) zu einer äußeren elektrischen Last (L) gebildet ist.

5. Generator nach Anspruch 1,
**dadurch gekennzeichnet, dass** die Kommunikationseinrichtung (K) als Funkmodul ausgebildet ist, insbesondere als Narrowband IoT - Modul, als Bluetooth - Modul, als WiFi - Modul, als GSM-Modul oder als LTE-Modul ausgebildet ist.

6. Generator nach Anspruch 1,
**dadurch gekennzeichnet, dass** die Empfangseinheit (E) über eine datenübertragende Verbindung mit einer Cloud (15) verbunden ist.

7. Generator nach Anspruch 1,
**dadurch gekennzeichnet, dass** die Kommunikationseinrichtung (K) als Repeater für eine drahtlose Funkverbindung ausgebildet ist.

8. Generator nach Anspruch 1,
**dadurch gekennzeichnet, dass** der Stator (2) eine Signalauswerteeinheit (16) umfasst, die die induzierten Spannungssignale des Generators (G) auswertet, wobei die Signalauswerteeinheit (16) elektrisch mit der Kommunikationseinrichtung (K) verbunden ist.

9. Generator nach Anspruch 1,
**dadurch gekennzeichnet, dass** die Kommunikationsverbindung (17) zwischen der Kommunikationseinrichtung (K) und der Empfangseinheit (E) eine bidirektionale Datenverbindung ist.

10. Generator nach Anspruch 1,
**dadurch gekennzeichnet, dass** die Kommunikationseinrichtung (K) mit zumindest einem Sensor (18) verbunden ist, und die Kommunikationseinrichtung (K) ausgebildet ist, das Ausgangssignal des Sensors (18) an die Empfangseinheit (E) zu übermitteln.

11. Generator nach Anspruch 1,
**dadurch gekennzeichnet, dass** der Generator (G) an einem Verbrennungsmotor (20) angeordnet ist, der einen Zylinder (21) mit einem Brennraum (22) aufweist, der durch einen Kolben (23) begrenzt ist, und der Kolben (23) mit einer in einem Kurbelgehäuse (25) drehend gelagerten Kurbelwelle (26) antriebsverbunden ist, sowie mit einer Zündvorrichtung (30) und einer Zündkerze (28), wobei der Rotor (3) des Generators (G) an einem mit der Kurbelwelle (26) drehenden Schwungrad (32) ausgebildet ist, und der Stator (2) zwischen dem Schwungrad (32) und dem Kurbelgehäuse (25) des Verbrennungsmotors (20) angeordnet ist.

12. Generator nach Anspruch 1,
**dadurch gekennzeichnet, dass** der Generator (G) als zusätzliche Energiequelle neben einem Zündgenerator angeordnet ist.

13. Generator nach Anspruch 12,
**dadurch gekennzeichnet, dass** das Schwungrad (32) zumindest teilweise aus elektrisch nicht leitendem Material besteht, insbesondere aus Kunststoff besteht.

14. Generator nach Anspruch 1,
**dadurch gekennzeichnet, dass** die Kommunikationseinrichtung (K) mit der Zündvorrichtung (30) synchronisiert ist, derart, dass die Kommunikationseinrichtung (K) im Bereich eines vorgegebenen Kurbelwellenwinkels der Zündung eine Kommunikation sperrt.

15. Generator nach Anspruch 1,
**dadurch gekennzeichnet, dass** die Kommunikationseinrichtung (K) über eine Datenverbindung (36) mit der Zündvorrichtung (30) verbunden ist, insbesondere drahtlos verbunden ist.
